# EUROPÄISCHE PATENTSCHRIFT

(11) **EP 0 464 387 B1**
(45) Veröffentlichungstag und Bekanntmachung des Hinweises auf die Patenterteilung: **01.02.1995**
(21) Anmeldenummer: 91109227.8
(22) Anmeldetag: 06.06.1991
(51) Int. Cl.: A01B 73/02, A01D 78/10

(54) **Heuwerbungsmaschine**
Hay-making machine
Machine de fenaison

(30) Priorität: 04.07.1990 DE 9010179 U
(43) Veröffentlichungstag der Anmeldung: 08.01.1992
(73) Patentinhaber: H. Niemeyer Söhne GmbH & Co. KG, D-48466 Hörstel (DE)
(72) Erfinder: Ungruh, Josef, W-4440 Rheine (DE); Hohm, Norbert, W-4446 Hörstel-Riesenbeck (DE)

(56) Entgegenhaltungen:
- EP-A- 0 165 638
- EP-A- 0 289 864
- EP-A- 0 291 812
- EP-A- 0 391 093
- DE-A- 3 827 047
- DE-A- 3 927 335

## Beschreibung

Die Erfindung bezieht sich auf eine Heuwerbungsmaschine gemäß dem Oberbegriff des Anspruchs 1.

Bei einer bekannten Maschine dieser Art (DE-A-38 27 047) ist den jeweils ersten Seitenträgern ein einzelner Kreiselrechen zugeordnet. Die beiden sich an die ersten Seitenträger gelenkig anschließenden zweiten Seitenträger sind jeweils mit zwei Kreiselrechen versehen, von denen der eine im mittleren Bereich und der andere am Ende des zweiten Seitenträgers angeordnet ist. Zur Überführung der Maschine in ihre Transportstellung sind die ersten Seitenträger um eine etwa fahrtrichtungsparallele Achse in eine etwa senkrechte Stellung hochklappbar, und die zweiten Seitenträger sind gegenüber den ersten Seitenträgern zusätzlich um ca. 45° um eine ebenfalls etwa fahrtrichtungsparallele Achse in gleicher Richtung einwärts klappbar. Eine derartige Maschinenausführung erreicht in der Transportstellung eine große Bauhöhe, die Schwierigkeiten beim Durchfahren von Unterführungen bereitet. Zudem ergibt sich in der Transportstellung ein relativ hoch liegender Maschinenschwerpunkt, der beim Transport einer vom Traktor getragenen Maschine erhebliche Probleme bereitet.

Aus der EP-A-0 391 093, die einen Stand der Technik nach Artikel 54(3) darstellt, ist ein achtkreiseliger Kreiselheuer mit einem quer zur Fahrtrichtung angeordneten Mittelträger und jeweils drei gelenkig miteinander verbundenen Seitenträgern bekannt, wobei mit dem Mittelträger zwei und jedem Seitenträger ein Kreiselrechen verbunden ist, die sich mittels Laufrädern auf dem Boden abstützen. Für die Transportstellung sind die neben dem Mittelträger befindlichen ersten Seitenträger in Fahrtrichtung gerichtet und die beiden äußersten Seitenträger befinden sich oberhalb von diesen. Von Nachteil ist die mangelnde Anpassungsfähigkeit der Maschine an die jeweiligen Gegebenheiten in der Transportstellung.

Bei Heuwerbungsmaschinen mit sechs Kreiselrechen ist es zur Absenkung des Schwerpunktes bekannt (EP-A-0 289 864), die zweiten Seitenträger relativ zu den ersten Seitenträgern um mehr als 90° in eine Transportstellung zu klappen, in der sie einwärts abwärts geneigt verlaufen. Eine derartige Transportstellung ist jedoch bei Heuwerbungsmaschinen mit acht oder mehr Kreiselrechen nicht verwirklichbar.

Bei Heuwerbungsmaschinen mit sechs Kreiselrechen ist es ferner bekannt (EP-A-0 165 638), die beiden ersten Seitenträger um Kochachsen entgegen Fahrtrichtung in eine etwa fahrtrichtungsparallele Stellung zurück- und die jeweils zweiten Seitenträger um etwa horizontale Achsen in eine etwa senkrechte Stellung hochzuklappen. Bei einer derartigen Ausführung ergibt sich in Transportstellung der Teile ein relativ weit hinter dem Traktor gelegener Maschinenschwerpunkt, der beim Transport einer vom Traktor getragenen Maschine ebenfalls erhebliche Probleme bereitet.

Der Erfindung liegt die Aufgabe zugrunde, eine Heuwerbungsmaschine mit zumindest acht Kreiselrechen zu schaffen, die in der Transportstellung in Höhe und Breite wenig Raum beansprucht und einen traktornah gelegenen Schwerpunkt darbietet, so daß die Maschine während des Transportes vom Traktor über die Dreipunkthydraulik getragen werden kann.

Die Erfindung löst diese Aufgabe durch eine Heuwerbungsmaschine mit den Merkmalen des Anspruchs 1. Hinsichtlich wesentlicher weiterer Ausgestaltungen wird auf die Ansprüche 2 bis 11 verwiesen.

Die erfindungsgemäße Heuwerbungsmaschine baut in der Transportstellung auch dann außerordentlich klein und verwirklicht eine günstige Schwerpunktlage zum Traktor sowohl bei Ausführung mit acht als auch mit zehn Kreiselrechen, wie sie für die Großflächenbearbeitung erwünscht ist. In der Transportstellung hat die Maschine lediglich eine Breite, die der Arbeitsbreite der beiden am Mittelträger angeordneten Kreiselrechen entspricht. In der Höhe unterschreitet die Maschine sowohl mit acht als auch mit zehn Kreiselrechen jene des die Maschinen ziehenden oder tragenden Traktors, so daß auch niedrige Unterführungen kein Transportproblem darstellen. Die Maschine ist dabei baulich und in ihrer Bedienung einfach.

Zahlreiche weitere Einzelheiten und Vorteile ergeben sich aus der nachfolgenden Beschreibung und der Zeichnung, in der zwei Ausführungsbeispiele des Gegenstands der Erfindung schematisch näher veranschaulicht sind. In der Zeichnung zeigen:
- Fig. 1 -: Eine schematische Seitenansicht einer achtkreiseligen Heuwerbungsmaschine nach der Erfindung in Transportstellung.
- Fig. 2 -: Die Maschine nach Fig. 1 in einem Schnitt nach der Linie A-A in Fig. 1.
- Fig. 3 -: Die Maschine nach Fig. 2 in einem abgebrochenen Schnitt nach der Linie B-B in Fig. 2.
- Fig 4 -: Eine Darstellung ähnlich Fig. 1 einer zehnkreiseligen Maschine nach der Erfindung.
- Fig. 5 -: Die Maschine nach Fig. 4 in einem Schnitt nach der Linie A-A in Fig. 4.
- Fig. 6 -: Die Maschine nach Fig. 5 in einem abgebrochenen Schnitt nach der Linie B-B in Fig. 5.
- Fig. 7 -: Eine vergrößerte Einzeldarstellung des Klappantriebs in einer Ansicht nach der Linie B-B in Fig. 5.

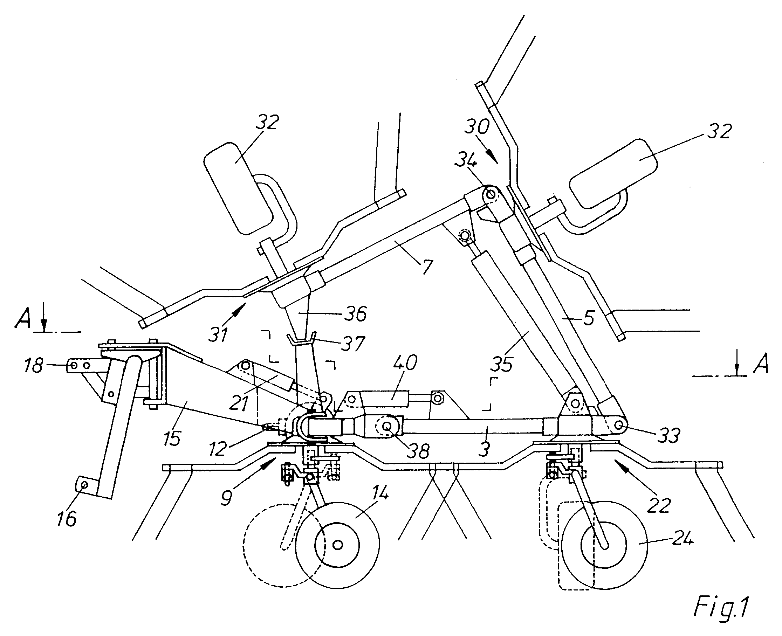

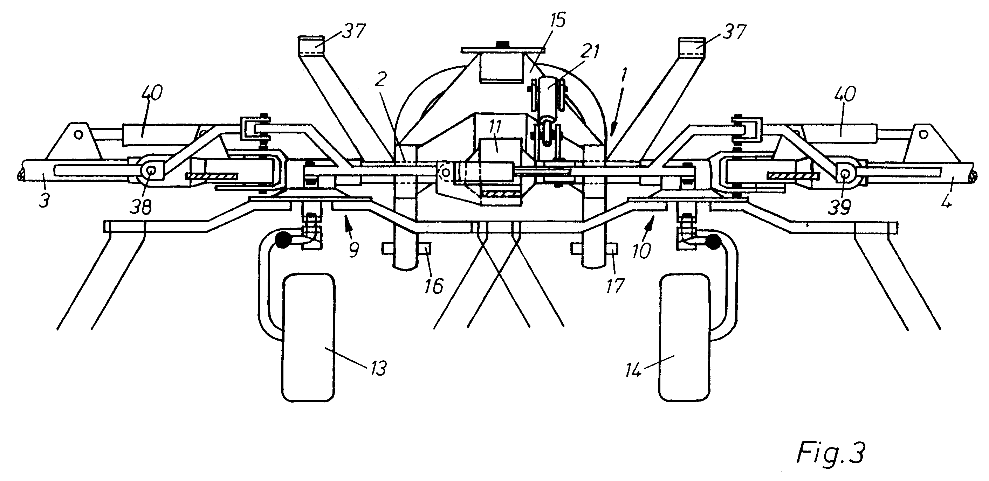

Die in den Figuren 1 bis 3 veranschaulichte Heuwerbungsmaschine umfaßt im einzelnen einen sich in Betriebsstellung der Maschine im wesentlichen horizontal und quer zur Fahrtrichtung der Maschine erstreckenden Querträger (1), der im einzelnen von einem Mittelträger (2), an diesen beidseitig gelenkig angeschlossenen ersten Seitenträgern (3,4), an diese wiederum außenseitig angelenkten zweiten Seitenträgern (5,6) und mit diesen schließlich gelenkig verbundenen dritten Seitenträgern (7) gebildet ist. Von den beiden dritten Seitenträgern (7) ist lediglich der an den zweiten Seitenträger (5) angeschlossene dritte Seitenträger (7) in Fig. 1 sichtbar.

Am Mittelträger (2) sind nahe dessen Enden zwei jeweils um eine Hochachse drehbare Kreiselrechen (9,10) abgestützt, die über nicht näher veranschaulichte, im Mittelträger (2) abgekapselt verlaufende Antriebswellen von einem zentralen Mittelgetriebe (11) her antreibbar sind. Die Eingangswelle (12) dieses Mittelgetriebes (11) ist über eine Gelenkwelle mit der Zapfwelle eines landwirtschaftlichen Traktors verbindbar.

Die Kreiselrechen (9,10) stützen sich über Stützräder (13,14) auf dem Boden ab, von denen das Stützrad (14) in Fig. 1 in ausgezogenen Linien jene Stellung veranschaulicht, die die Stützräder (13,14) bei gezogenem Anschluß der Maschine am Traktor einnehmen. In gestrichelten Linien zeigt das Stützrad (14) in Fig. 1 eine Stellung, wie sie für die Stützräder (13,14) in der Arbeits- und der Transportstellung bei einer an die Dreipunkthydraulik eines Traktors angebauten Maschine erforderlich ist. Die Umstellung kann von Hand oder mittels eines Stellgestänges erfolgen.

Für einen solchen Anbau an die Dreipunkthydraulik eines Traktors ist der Mittelträger (2) mit einem vorderen Ausleger (15) versehen, der an seinem vorderen Ende mit den üblichen Anschlüssen (16,17) für die Unterlenker und einem Anschluß (18) für den Oberlenker der Dreipunkthydraulik versehen ist. Der Mittelträger (2) ist in Lagern (19,20) an der rückwärtigen Seite des Auslegers (15) um eine horizontale Querachse begrenzt schwenkbar abgestützt und wird durch eine Stellvorrichtung (21) in seiner jeweiligen Schwenklage fixiert, so daß den Hochachsen der Kreiselrechen in der Betriebstellung der Maschine eine jeweils gewünschte leichte Vorneigung in Fahrtrichtung vorgegeben werden kann.

Die an den Mittelträger (2) gelenkig angeschlossenen ersten Seitenträger (3,4) sind an ihrem äußeren Ende ebenfalls mit einem Kreiselrechen (22,23) versehen, der über in den Seitenträgern (3,4) gelagerte Antriebswellen um jeweils eine Hochachse in Umlauf versetzbar ist, die zu den Hochachsen der Kreiselrechen (9,10) parallel verläuft, wenn sich die Maschine in Betriebsstellung befindet. Auch diese Kreiselrechen (22,23) stützen sich auf dem Boden über Stützräder (24) ab, von denen in Fig. 1 lediglich das Stützrad (24) für den Kreiselrechen (22) veranschaulicht ist. Fig. 1 zeigt dabei das Stützrad (24) in ausgezogenen Linien in einer Stellung, in der es fahrtrichtungsparallel ausgerichtet und dazu bestimmt ist, bei einer für einen Anhängerbetrieb angeschlossenen Maschine diese auch beim Transport auf dem Boden abzustützen. Bei einer am Dreipunktanbau mit dem Traktor beim Transport verbundenen Maschine können die Stützräder (24) der Kreiselrechen (22,23) in ihrer Betriebsstellung verbleiben, die in Fig. 1 in gestrichelten Linien dargestellt ist.

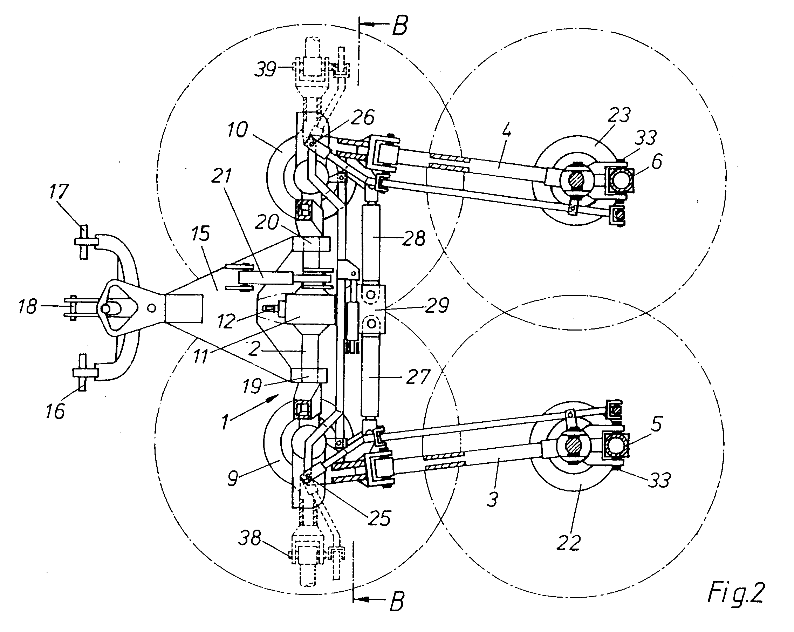

Die dem Mittelträger (2) benachbarten ersten Seitenträger (3,4) sind um zu den Hochachsen der Zinkenkreisel (9,10) parallele, außenseitig im Abstand neben diesen angeordnete Klappachsen (25,26) aus ihrer Betriebsstellung, die in Fig. 2 gestrichelt angedeutet ist, in die in den Fig. 1 und 2 wiedergegebene Transportstellung klappbar, in der sich die Hochachsen der Kreiselrechen (22,23) in einer Fluchtlage hinter den Hochachsen der Kreiselrechen (9,10) befinden. Dementsprechend beträgt der Klappwinkel etwas mehr als 90°, und die dem Mittelträger (2) benachbarten Seitenträger (3,4) nehmen eine geringfügig konvergierende Lage ein. Zur Durchführung dieser Klappbewegung sind Druckmittelantriebe (27,28) vorgesehen, die gelenkig an den dem Mittelträger (2) benachbarten Seitenträgern (3,4) und an einem Widerlager (29) am Mittelträger (2) angelenkt sind.

Den zweiten Seitenträgern (5,6) ist nahe deren Enden ebenfalls je ein Kreiselrechen (30) zugeordnet, von denen lediglich der Kreiselrechen (30) am zweiten Seitenträger (5) sichtbar ist. Auch an den Enden der dritten Seitenträger (7) befindet sich jeweils ein Kreiselrechen (31), von denen in Fig. 1 lediglich der Kreiselrechen (31) am Ende des in Betrachtungsrichtung vorderen Seitenträgers (7) sichtbar ist. Die Kreiselrechen (30,31) stützen sich im Betrieb der Maschine über Stützräder (32) auf dem Boden ab.

Für die Überführung in die Transportstellung sind die zweiten Seitenträger (5,6) um eine jeweils annähernd horizontale Klappachse (33) um einen 90° übersteigenden Winkel relativ zu den ihnen benachbarten ersten Seitenträgern (3,4) klappbar, so daß sie, wie das die Fig. 1 veranschaulicht, in ihrer Transportstellung eine aufwärts und vorwärts geneigte Lage einnehmen.

Die dritten Seitenträger (7) sind um Klappachsen (34) klappbar mit den zweiten Seitenträgern (5,6) verbunden, von denen nur Klappachse (34) der Gelenkverbindung zwischen den in Betrachtungsrichtung vorderen Seitenträgern (5) und (7) in Fig. 1 sichtbar ist. Diese Klappachsen zwischen den zweiten und dritten Seitenträgern sind parallel zu den Klappachsen (33) ausgerichtet und verlaufen dabei wie diese unter rechtem Winkel zu den Hochachsen für die Kreiselrechen.

Wie der Fig. 1 entnommen werden kann, nehmen die dritten Seitenträger (7) in der Transportstellung der Maschine eine Lage ein, in der sie sich vorwärts und abwärts erstrecken und in der ihre Kreiselrechen (32) eine Stellung oberhalb der Kreiselrechen (9,10) am Mittelträger (2) einnehmen. In diese Transportstelllung gelangen sie durch eine Klappbewegung von etwa 90° relativ zu den zweiten Seitenträgern (5,6), die durch Druckmittelzylinder (35) herbeigeführt wird, die jeweils gelenkig am ersten und am dritten Seitenträger (3,4) bzw. (7) angreifen. Fig. 1 veranschaulicht den Druckmittelantrieb (35) zwischen den vorderen Seitenträgern (3,7). Die Druckmittelantriebe (35) bewirken bei ihrer Beaufschlagung zunächst ein Hochklappen der dritten Seitenträger (7) relativ zu den zweiten Seitenträgern (5,6) und dann ein Klappen der zweiten Seitenträger (5,6) relativ zu den dem Mittelträger (2) benachbarten ersten Seitenträgern (3,4).

Die dritten Seitenträger (7) sind an ihrem Außenende auf ihrer dem zugehörigen Kreiselrechen (31) jeweils gegenüberliegenden Seite mit einer Transportstütze (36) versehen. Der Mittelträger (2) trägt nahe seinen Außenenden je eine Aufnahmetasche (37) für die Aufnahme der Transportstützen (36) in der Transportstellung der Maschine, so daß bei entsprechender Beaufschlagung der Druckmittelantriebe (35) die zweiten und dritten Seitenträger fixierbar sind.

Die Klappachsen (33,34) der Gelenkverbindungen zwischen den dem Mittelträgern (2) benachbarten ersten und zweiten sowie den zweiten und dritten Seitenträgern haben in Betriebsstellung der Maschine eine fahrtrichtungsparallele Ausrichtung und belassen den zweiten und dritten Seitenträgern die Möglichkeit, auf und ab gerichtete Anpassungsbewegungen auszuführen, die durch die jeweiligen Stützräder (32) unter den Kreiselrechen (30,31) hervorgerufen werden.

Damit auch die ersten dem Mittelträger (2) benachbarten Seitenträger (3,4) derartige Anpaßbewegungen ausführen können, sind sie nahe ihren Klappachsen (25,26) mit Gelenken mit in der Betriebsstellung fahrtrichtungsparallelen Gelenkachsen (38,39) versehen, die durch Stabilisierungszylinder (40) überbrückt sind und durch diese für Anpaßbewegungen freigebbar oder sperrbar sind.

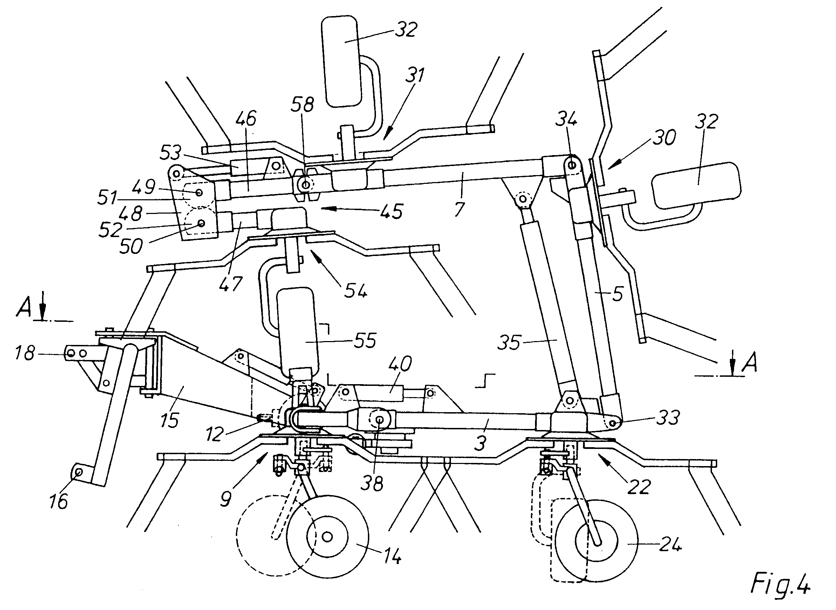

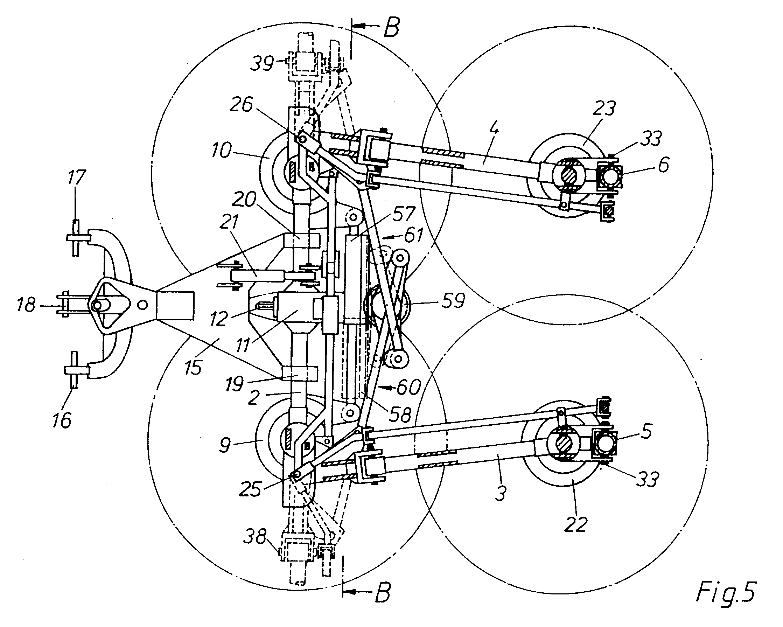

Die Maschinenausführung nach Fig. 4 bis 7 entspricht weitgehend der nach Fig. 1 bis 3, und für alle entsprechenden Bauteile wurden daher gleiche Bezugszeichen verwendet.

Bei der Maschine nach Fig. 4 bis 7 sind den dritten Seitenträgern (7) außenseitig vierte Seitenträger (45) benachbart, von denen in Fig. 4 lediglich der in Betrachtungsrichtung vordere Seitenträger (45) veranschaulicht ist. Die vierten Seitenträger (45) sind jeweils in einen Innen- und einen Außenteil (46,47) unterteilt, die untereinander über ein Verbindungsstück (48) klappbar verbunden sind, so daß der Außenteil (47) aus einer in der Betriebsstellung der Maschine zum Innenteil (46) fluchtenden Strecklage in eine Transportstellung klappbar ist, in der er sich unterhalb des Innenteils (46) und etwa parallel zu diesem erstreckt.

Für die Ausführung einer derartigen Klappbewegung ist das Verbindungsstück (48) um eine Gelenkachse (49) mit dem Innenteil (46) schwenkbar verbunden, und der Außenteil (47) ist um eine Gelenkachse (50) schwenkbar am Verbindungsstück (48) abgestützt. Die beiden einander zugewandten Enden des Innen- und des Außenteils (46,47) der vierten Seitenträger (45) stehen über Zahnradsegmente (51,52) in Eingriff, die bei einem Verschwenken des Verbindungsstücks (48) um die Gelenkachse (49) relativ zum Innenteil (46) dem Außenteil (47) eine entsprechende Schwenkbewegung um die Gelenkachse (50) relativ zum Verbindungsstück (48) vorgeben. Diese Ausbildung ermöglicht eine Klappbewegung des Außenteils (47) zum Innenteil (46) um etwa 180° bei einer Schwenkbewegung des Verbindungsstücks (48) zum Innenteil (46) nur um etwa 90°, so daß sie mittels eines Druckmittelantriebs (53) ausführbar ist, der einerseits am Innenteil (46) und andererseits am Verbindungsstück (48) gelenkig angreift.

Die den vierten Seitenträgern (45) zugeordneten Kreiselrechen sind, wie dies Fig. 4 bei (54) veranschaulicht, jeweils am Ende des Außenteils (47) des vierten Seitenträgers abgestützt. In der Transportstellung der Maschine befindet sich ein Rechkreisel (54) jeweils unterhalb eines Rechkreisels (31) an einem dritten Seitenträger (7) und oberhalb eines der Rechkreisel (9,10) am Mittelträger (2), wobei sich das Stützrad (55) jeweils in einem Aufnahmeglied (56) abstützt, das jeweils im Bereich eines Endes des Mittelträgers (2) an dessen Oberseite vorgesehen ist.

Der Innenteil (46) eines jeden vierten Seitenträgers (45) ist begrenzt schwenkbar über ein Gelenk an das äußere Ende eines dritten Seitenträgers angeschlossen, das eine parallel zu den Gelenkachsen (33,34) ausgerichtete Gelenkachse (58) aufweist. Der vierte Seitenträger (45) ist auf diese Weise nur begrenzt gegenüber dem dritten Seitenträger (7) schwenkbar mit der Folge, daß zwar in Betriebsstellung der vierte Seitenträger jeweils die durch die Bodenabtastung erwünschten Ausgleichsbewegungen ausführen kann, beim Klappen des dritten Seitenträgers in die Transportstellung jedoch eine Mitnahme erfährt, in deren Verlauf er (nach Umklappen der Außenteile (47) relativ zu den Innenteilen (46)) in seine Transportstellung gemäß Fig. 1 gelangt.

Abweichend zu der Ausführung nach Fig. 1 bis 3 ist bei der nach Fig. 4 bis 7 auch noch der Klappantrieb für die dem Mittelträger (2) benachbarten ersten Seitenträger (3,4) ausgeführt.

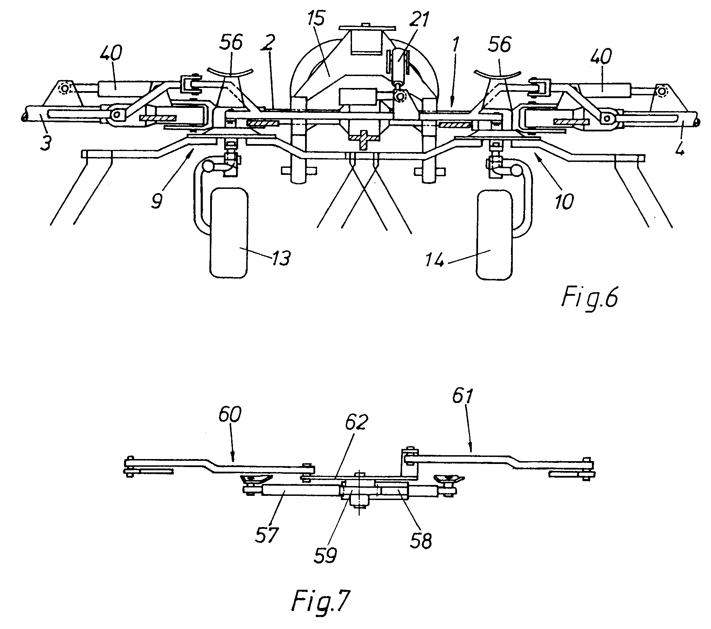

Anstelle von gesonderten Druckmittelantrieben ist zum Klappen der beiden dem Mittelträger (2) benachbarten ersten Seitenträger (3,4) ein einziger, gemeinsamer Druckmittelantrieb (57) vorgesehen, der mittels einer von ihm translatorisch bewegten Zahnstange (58) ein Zahnrad (59) betätigt, das am Mittelträger abgestützt und um eine zu den Klappachsen (25,26) der dem Mittelträger (2) benachbarten ersten Seitenträger (3,4) parallel ausgerichtete Drehachse drehbar gelagert ist. Dieses Zahnrad (59) betätigt zwei Kurbeltriebe (60,61), die mit den dem Mittelträger (2) benachbarten ersten Seitenträgern (3,4) gelenkig verbunden sind. Die beiden Kurbeltriebe (60,61) sind dabei, wie dies der Fig. 7 entnommen werden kann, in Richtung der Drehachse des Zahnrades (59) gegeneinander axial höhenversetzt angeordnet, so daß die am Zahnrad (59) bzw. einer mit diesem verbundenen Kurbelplatte (62) angreifenden Kurbellenker in eine einander verschneidende Position gelangen können.

Ein derartiger Antrieb für die Klappbewegung der ersten Seitenträger sichert bauliche Einfachheit und synchrone Klappbewegungen.

## Patentansprüche

1. Heuwerbungsmaschine mit einem zumindest acht um Hochachsen drehbare Kreiselrechen abstützenden Querträger (1), der einen an einen landwirtschaftlichen Traktor oder dergleichen Zugfahrzeug anhäng- oder anbaubaren Mittelträger (2) mit zwei mittleren Kreiselrechen (9,10) und an diesen angelenkte, untereinander gelenkig verbundene Seitenträger (3,4,5,6,7) für weitere Kreiselrechen umfaßt, wobei die Seitenträger (3,4,5,6,7) aus ihrer Betriebsstellung in eine die Maschinenbreite verringernde Transportstellung klappbar sind, dadurch gekennzeichnet, daß jedem Seitenträger (3,4,5,6,7,45) ein Kreiselrechen (22,23,30,31,54) zugeordnet ist, und zur Überführung der Seitenträger aus der Betriebsstellung in die Transportstellung die beiden dem Mittelträger (2) benachbarten ersten Seitenträger (3,4) jeweils um eine etwa vertikale Klappachse (25,26) rückwärts- sowie die sich an die die dem Mittelträger (2) benachbarten ersten Seitenträger (3,4) anschließenden zweiten Seitenträger (5,6) jeweils um eine annähernd horizontale Klappachse (33) relativ zu ihrem dem Mittelträger (2) benachbarten ersten Seitenträger (3,4) aufwärts und vorwärts klappbar sind, wobei die beiden dem Mittelträger (2) benachbarten ersten Seitenträger (3,4) im Bereich der etwa vertikalen Klappachsen (25,26) jeweils eine in Betriebsstellung etwa horizontale, fahrtrichtungsparallele Gelenkachse (38,39) aufweisen, die jeweils durch einen Stabilisierungszylinder (40) überbrückt werden und durch diese für Anpaßbewegungen freigebbar oder sperrbar sind.

2. Maschine nach Anspruch 1, dadurch gekennzeichnet, daß die etwa vertikalen Klappachsen (25,26) für die beiden ersten Seitenträger (3,4) im Abstand außenseitig neben den Hochachsen der am Mittelträger (2) abgestützten Kreiselrechen (9,10) angeordnet und die ersten Seitenträger (3,4) in eine entgegen Fahrtrichtung konvergierende Transportstellung rückwärts klappbar sind, in der die Hochachsen der an den ersten Seitenträgern (3,4) angeordneten Kreiselrechen (22,23) in Flucht hinter den Hochachsen der am Mittelträger (2) angeordenten Kreiselrechen (9,10) gelegen sind.

3. Maschine nach Anspruch 1 oder 2, dadurch gekennzeichnet, daß die beiden ersten Seitenträger (3,4) benachbarten zweiten Seitenträger (5,6) um einen 90° übersteigenden Winkel in eine aufwärts und leicht vorwärts geneigte Transportstellung klappbar sind.

4. Maschine nach einem der Ansprüche 1 bis 3, dadurch gekennzeichnet, daß die beiden den zweiten Seitenträgern außenseitig benachbarten dritten Seitenträger (7) relativ zu den zweiten Seitenträgern (5,6) um etwa 90° in eine Transportstellung klappbar sind, in der sie sich vorwärts- und leicht abwärtsgeneigt erstrecken.

5. Maschine nach einem der Ansprüche 1 bis 4, dadurch gekennzeichnet, daß die dritten Seitenträger (7) an ihrem Außenende auf ihrer dem Kreiselrechen (31) jeweils gegenüberliegenden Seite eine Transportstütze (36) und der Mittelträger (2) nahe seinen Außenenden je eine Aufnahmetasche (37) für die Aufnahme der Transportstützen (36) in der Transportstellung der Maschine aufweisen.

6. Maschine nach einem der Ansprüche 1 bis 4, dadurch gekennzeichnet, daß den dritten Seitenträgern (7) außenseitig vierte Seitenträger (45) benachbart sind, die in einen Innen- und einen Außenteil (46,47) unterteilt sind, wobei die Außenteile (47) mitsamt dem an ihnen abgestützten Kreiselrechen (54) um etwa 180° relativ zu den Innenteilen (46) in eine Transportstellung klappbar sind, in der sie sich unterhalb ihrer Innenteile (46) und etwa parallel zu diesen erstrecken.

7. Maschine nach Anspruch 6, dadurch gekennzeichnet, daß die beiden einander zugewandten Enden des Innen- und des Außenteils (46,47) der vierten Seitenträger (45) über Zahnradsegemente (51,52) in Eingriff stehen.

8. Maschine nach Anspruch 6 oder 7, dadurch gekennzeichnet, daß der Mittelträger (2) im Bereich seiner Enden oberseitig mit je einem Aufnahmeglied (56) für die Aufnahme des Stützrades des jeweils am Ende des vierten Seitenträgers angeordneten Kreiselrechens (54) in der Transportstellung der Maschine versehen ist.

9. Maschine nach einem der Ansprüche 1 bis 8, dadurch gekennzeichnet, daß das Stützrad (24) der beiden an den ersten Seitenträgern (3,4) abgestützten Kreiselrechen (22,23) jeweils um etwa 90° in eine Stellung klappbar ist, in der es bei in Transportstellung befindlichem ersten Seitenträger (3,4) fahrtrichtungsparallel ausgerichtet ist.

10. Maschine nach einem der Ansprüche 1 bis 9, dadurch gekennzeichnet, daß zum Klappen der beiden ersten Seitenträger (3,4) ein gemeinsamer Druckmittelantrieb (57) vorgesehen ist, der mittels einer Zahnstange (58) ein am Mittelträger (2) abgestütztes Zahnrad (59) antreibt, das um eine zu den Klappachsen (25,26) der ersten Seitenträger (3,4) parallel ausgerichtete Drehachse drehbar gelagert ist und zwei an den ersten Seitenträgern (3,4) angreifende Kurbeltriebe betätigt.

11. Maschine nach Anspruch 10, dadurch gekennzeichnet, daß die beiden Kurbeltriebe (60,61) in Richtung der Drehachse des Zahnrads (59) gegeneinander axial höhenversetzt angeordnet sind.

## Claims

1. Hay making machinery with transverse beam (1) supporting a minimum of eight rotary rakes swivelling about vertical axes, which comprises a central beam (2) which can be towed by or mounted on an agricultural tractor or similar traction vehicle with two central rotary rakes (9,10) and side beams (3,4,5,6,7) for additional rotary rakes coupled to this, articulated with one another, the side beams (3,4,5,6,7) folding from their operating position into a transportation position reducing the machine width, characterized in that, a rotary rake (22,23,30, 31,54), is assigned to each side beam (3,4,5,6,7,45) and, in order to transfer the side beams from the operating position into the transportation position, both the first side beams (3,4) adjoining the central beam (2) can be folded backwards in each case about an approximately vertical folding axis (25,26), as well as the second side beams (5,6) which are attached to the first side beams (3,4) adjoining the central beam (2) which can, in each case, be folded upwards and forwards about a folding axis (33) approaching the horizontal relative to their first side beams (3,4) adjoining the central beam (2), both first side beams (3,4) adjoining the central beam (2) in the area of the approximately vertical folding axes (25,26) having, in the operating position, in each case, an approximately horizontal coupling axis (38,39) parallel to the direction of travel which, in each case, is spanned by a stabilizing cylinder (40) and by means of this can be released or locked for adjustment movements.

2. Hay making machinery according to Claim 1, characterized in that, the approximately vertical folding axes (25,26) for the two first side beams (3,4) arranged at a distance on the outside beside the vertical axes of the rotary rakes (9,10) supported on the central beam (2), and the first side beams (3,4) can be folded backwards into a transportation position converging against the direction of travel, in which the vertical axes of the rotary rakes (22,23) are laid aligned behind the vertical axes of the rotary rakes (9,10) arranged on the middle beam (2).

3. Hay making machinery according to Claims 1 or 2, characterized in that, the second side beams (5,6) adjoining the first two side beams (3,4) can be folded about an angle in excess of 90° into an upwards transportation position which is slightly inclined forwards.

4. Hay making machinery according to one of the Claims 1 to 3, characterized in that, the two third side beams (7) which adjoin the second side beams on the outside relative to the second side beams (5,6) can be folded through approximately 90° into a transportation position, in which they extend forwards and are inclined slightly downwards.

5. Hay making machinery according to one of the Claims 1 to 4, characterized in that, the third side beam (7) has at its outer end in each case, on the side opposite the rotary rake (31), a transportation brace (36), and the central beam (2) near each of its outer ends has a locating pocket (37) to locate the transport braces (36) in the transportation position of the machinery.

6. Hay making machinery according to one of the Claims 1 to 4, characterized in that, the fourth side beams (45) outside the third side beams (7) are adjacent, these are divided into an inner and an outer part (46,47), the outer part (47), together with the rotary rakes (54) supported on them, folding through approximately 180° relative to the inner part (46) into a transportation position, in which they extend below their inner part (46) and approximately parallel to it.

7. Hay making machinery according to Claim 6, characterized in that, the two facing ends of the inner and outer parts (46,37) of the fourth side beams (45) are meshed by means of segments of a gear-wheel (51,52).

8. Hay making machinery according to Claim 6 or 7, characterized in that, the central beam (2) in the area of its ends, on the upper side, each is provided with each a locating member (56) for locating, in the transportation position, the support wheel of the respective rotary rakes (54) arranged at the end of the fourth side beam.

9. Hay making machinery according to one of the Claims 1 to 8, characterized in that, the support wheel (24) of the two rotary rakes (22,23) supported on the first side beams can be folded in each case through approximately 90° into a position in which, with the first side beam (3,4) in the transportation position, it is aligned parallel to the direction of travel.

10. Hay making machinery according to one of the Claims 1 to 9, characterized in that, to fold the two first side beams (3,4), a common hydraulically operated actuator (57) is provided which drives a gear wheel (59) supported on the central beam (2) by means of a rack (58), which runs on bearings so it can rotate about an axis of rotation aligned parallel to the folding axes (25,26) of the first side beams (3,4) and activates two crank mechanisms acting upon the first side beams (3,4).

11. Hay making machinery according to Claim 10, characterized in that, the two crank mechanisms (60,61) are arranged with staggered axis heights in the directions of the axis of rotation of the gear wheel (59).

## Revendications

1. Machine pour la fenaison avec une poutre transversale (1) soutenant au moins huit râteaux centrifuges pouvant tourner autour d'axes verticaux, poutre transversale qui comprend une poutre centrale (2) pouvant être accrochée ou montée sur un tracteur agricole ou un véhicule de traction analogue, avec deux râteaux centrifuges médians (9,10) et des poutres latérales (3,4,5,6,7) articulées à la poutre centrale, reliées entre elles de façon articulée pour d'autres râteaux centrifuges, les poutres latérales (3,4,5,6,7) pouvant être repliées à partir de leur position de fonctionnement dans une position de transport réduisant la largeur de la machine, machine pour la fenaison caractérisée en ce qu'à chaque poutre latérale (3,4,5,6,7,45) est associé un râteau centrifuge (22,23,30,31,54) et en ce que pour faire passer les poutres latérales de leur position de fonctionnement dans la position de transport les deux premières poutres latérales (3,4) voisines de la poutre centrale (2) peuvent être repliées en arrière et en avant autour d'un axe de repliement sensiblement vertical (25,26) - ainsi que les secondes poutres latérales (5,6) se raccordant aux premières poutres latérales (3,4) chaque fois autour d'un axe de repliement (33) sensiblement horizontal par rapport à sa première poutre latérale (3,4) voisine.

2. Machine selon la revendication 1, caractérisée en ce que les axes à peu près verticaux de repliement (25,26) sont disposés pour les deux premières poutres latérales (3,4) à une certaine distance du côté extérieur près des axes verticaux des râteaux centrifuges (9,10) s'appuyant sur la poutre centrale (2) et les deux premières poutres latérales (3,4) peuvent être repliées vers l'arrière dans une position de transport en convergeant en sens opposé au sens de marche, position de transport dans laquelle les axes verticaux des râteaux centrifuges (22,23) disposés sur les premières poutres latérales (3,4) sont mises en alignement derrière les axes verticaux des râteaux centrifuges (9,10) disposés sur la poutre centrale (2).

3. Machine selon la revendication 1 ou 2, caractérisée en ce que les deux poutres latérales (5,6) jouxtant les deux premières poutres latérales (3,4) peuvent être repliées d'un angle dépassant 90° dans une position de transport inclinée vers le haut et légèrement en avant.

4. Machine selon l'une des revendications 1 à 3, caractérisée en ce que les deux poutres latérales (7) en troisième position jouxtant du côté extérieur les deux secondes poutres latérales peuvent être repliées par rapport aux secondes poutres latérales (5,6) d'à peu près 90° dans une position de transport dans laquelle elles s'étendent en avant et sont légèrement inclinées vers l'arrière.

5. Machine selon l'une des revendications 1 à 4, caractérisée en ce que les troisièmes poutres latérales (7) présentent à leur extrémité extérieure sur leur côté respectivement opposé au râteau centrifuge (31) un appui de transport (36) et la poutre centrale (2) près de ses extrémités extérieures présente respectivement une cuvette de réception (37) pour recevoir les appuis de transport (36) dans la position de transport de la machine.

6. Machine selon l'une des revendications 1 à 4, caractérisée en ce que les quatrièmes poutres latérales (45) sont voisines du côté extérieur des troisièmes poutres latérales (7), poutres latérales (45) qui sont subdivisées en une partie intérieure et une partie extérieure (46,47), les parties extérieures (47) ainsi que le râteau centrifuge (54) s'appuyant sur elles pouvant être repliées à environ 180° par rapport aux parties intérieures (46) dans une position de transport, dans laquelle elles s'étendent en-dessous de leurs parties intérieures (46) et à peu prés parallèlement à celle-ci.

7. Machine selon la revendication 6, caractérisée en ce que les deux extrémités tournées l'une vers l'autre de la partie intérieure et de la partie extérieure (46,47) des quatrièmes poutres latérales (45) viennent en prise sur des segments de roue dentée (51,52).

8. Machine selon la revendication 6 ou 7, caractérisée en ce que la poutre centrale (2) dans la zone de ses extrémités est pourvue du côté supérieur respectivement d'un organe de réception (56) pour recevoir la roue d'appui du râteau centrifuge (54) respectivement disposé à l'extrémité du quatrième support latéral dans la position de transport de la machine.

9. Machine selon l'une des revendications 1 à 8, caractérisée en ce que la roue d'appui (24) des deux râteaux centrifuges (22,23) s'appuyant sur les premières poutres latérales (3,4) peuvent être respectivement repliées à environ 90° dans une position dans laquelle la roue est orientée parallèlement au sens de la marche dans le cas où la première poutre latérale (3,4) se trouve en position de transport.

10. Machine selon l'une des revendications 1 à 9, caractérisée en ce que l'on prévoit pour le repliement des deux premières poutres latérales (3,4) un mécanisme d'entraînement commun actionné par un fluide sous pression (57), qui au moyen d'une crémaillère (58) entraîne une roue dentée s'appuyant sur la poutre centrale (2), roue dentée qui est montée de façon à pouvoir tourner autour d'un axe de rotation orienté parallèlement aux axes de repliement (25,26) des premières poutres latérales (3,4) et qui actionne deux commandes à manivelle venant en prise sur les premières poutres latérales (3,4).

11. Machine selon la revendication 10, caractérisée en ce que les deux commandes à manivelle (60,61) sont disposées de façon décalée en hauteur axialement l'une par rapport à l'autre dans le sens de l'axe de rotation de la roue dentée (59).
